# EUROPEAN PATENT APPLICATION

(11) **EP 2 280 289 A2**
(43) Date of publication of application: **02.02.2011**
(21) Application number: 10170993.9
(22) Date of filing: 28.07.2010
(51) Int. Cl.: G01S 7/40, G01S 13/56

(54) **Human body detecting device**

(30) Priority: 28.07.2009 JP 2009175900
(71) Applicant: Panasonic Electric Works Co., Ltd, Kadoma-shi Osaka 571-8686 (JP)
(72) Inventor: Murakami, Tadasi, Osaka (JP); Sobagaki, Tamami, Kyoto (JP); Gotou, Shigeo, Osaka (JP)
(74) Representative: Rüger, Barthelt & Abel Patentanwälte

(57) **Abstract**

[Summary]

[Object] To set detection areas to both a front first area and a second area other than the first area without greatly deteriorating sensitivity in the first area.

[Means for Settlement] A human body detecting device 2 includes: a sensor main body 20 emitting a millimeter wave, receiving the radio wave reflected by a human body, a floor or a wall, and determining whether a person is present according to a difference between a frequency of the emitted radio wave and a frequency of the received radio wave; and a reflector 30 reflecting a part of the radio wave emitted by the sensor main body 20. The sensor main body 20 emits the radio wave toward a first area D1 in front of the sensor main body 20, and the reflector 30 reflects the radio wave toward a second area D2 other than the first area. The first area D1 and the second area D2 are set to detection areas, respectively.

## Description

### [Field of the Invention]

The present invention relates to a wireless human body detecting device that emits a radio wave, that receives the radio wave, and that determines whether or not a person is present based on relationship between the emitted radio wave and the received radio wave.

### [Background Art]

Conventionally, there is provided a human body detecting device detecting presence of a person in a set detection area. A human body detecting device of this type is employed, for example, to control a lighting condition of a lighting device. By automatically lighting and lighting off the lighting device, it is possible to improve convenience of the lighting device, to secure safety of a person, to prevent a user from forgetting to light off the lighting device, and to save energy. For a lighting device disposed at a location such as a passage or staircase of a building where the lighting device is used less frequently, energy saving is gradually and normally made by the human body detecting device.

Meanwhile, as the human body detecting device employed to control the lighting device, a PIR sensor (Passive Infrared Radiation) that detects a temporal change of a temperature of the set detection area by an infrared ray incident from the detection area and that detects presence of a person is mainly used. Since detecting a person according to the temporal change of the temperature of the detection area, the PIR sensor often makes misdetection at a location having sharp temperature change. Furthermore, if a detection distance from the human body detecting device to the person is long, then intensity of the infrared ray incident from the person weakens, and the human body detecting device cannot detect the person. Therefore, a problem occurs to the human body detecting device if the human body detecting device is used at a location where the detection distance is long.

Considering the problem, an active human body detecting device that transmits a signal, receives the transmitted signal, and that detects a person is used at a location having sharp temperature change or a location where a detection distance is long (see, for example, Patent Document 1). The human body detecting device described in the Patent Document 1 includes an antenna emitting a radio wave serving as a signal, and a receiver that receives the radio wave serving as the signal, and determines whether or not a person is present according to a change of an amplitude of the received radio wave. Because of emission of the radio wave by itself, the human body detecting device can be employed even at a location where a detection distance is long. In addition, because of ability to detect presence of a person irrespective of ambient temperature, the human body detecting device can be employed even at a location having sharp temperature change.

### [Conventional Technique Documents]

### [Patent Documents]

[Patent Document 1] Japanese Unexamined Patent Publication No. 2002-285624

### [Disclosure of the Invention]

### [Problems to be solved by the Invention]

In the meantime, the wireless human body detecting device detecting presence of a person based on a radio wave is normally configured so that the antenna emitting the radio wave is given directivity to emit the radio wave forward, and so that a front space is set as the detection area. Due to this, the human body detecting device has lower lateral sensitivity than front sensitivity.

Accordingly, if the human body detecting device is used while being attached to a lighting device provided on a wall at the far end of a passage or staircase, the human body detecting device cannot often detect presence of a person against the wall on which the lighting device is provided.

To set the detection area against the wall, the human body detecting device may be configured to increase sensitivity below the lighting device by, for example, lowering the directivity of the antenna emitting the radio wave or making the antenna omnidirectional. However, if the antenna is made to have lower directivity or made omnidirectional, then the sensitivity of the human body detecting device in a direction such as a direction above the lighting device in which there is no need to detect presence of a person besides the sensitivity below the lighting device increases, and the sensitivity in front of the lighting device greatly decreases.

As stated, the wireless human body detecting device has the problem that the front sensitivity greatly decreases if the directivity of the antenna emitting the radio wave is lowered so as to set not only the front space but also a space such as a lower space other than the front space.

The present invention has been achieved in view of the above-stated circumstances. It is an object of the present invention to provide a human body detecting device that can set both a front space and a space other than the front space as detection areas without greatly deteriorating front sensitivity.

### [Means adapted to solve the Problems]

To attain the object, the present invention includes: a sensor main body emitting a radio wave toward a first area in front of the sensor main body, receiving the radio wave, and determining whether a person is present according to relationship between the emitted radio wave and the received radio wave; and a reflector reflecting a part of the radio wave emitted by the sensor main body, wherein: the reflector reflects the radio wave toward a second area other than the first area in front of the sensor main body.

The reflector is preferably made of a metallic material.

It is also preferable that the reflector is a meshed reflector.

### [Effect of the Invention]

According to a configuration of the present invention, the reflector emits the radio wave toward the second area. Due to this, it is possible to increase sensitivity in the second area without increasing sensitivity in areas other than the first and second areas. As a result, it is advantageously possible to set the second area other than the first area as the detection area without greatly deteriorating the sensitivity in the first area in front of the sensor main body.

Furthermore, with the configuration in which the reflector is made of the metallic material, the radio wave can be advantageously reflected with high reflectivity.

Moreover, with the configuration in which the reflector is a meshed reflector, the reflector reflects only the radio wave emitted by the sensor main body. For example, if the present invention is used while being attached to a lighting device, the present invention has the following effects. Even if light is incident on the reflector from a light source, the reflector transmits the light. Therefore, it is advantageously possible to prevent the reflector from cutting off the light.

### [Brief Description of the Drawings]

[Fig. 1] Fig. 1 is a plan view of a human body detecting device according to an embodiment.
[Fig. 2] Fig. 2 is a perspective view of an installation location of a lighting device to which the human body detecting device is attached.
[Fig. 3] Fig. 3 is a block diagram of a sensor main body of the human body detecting device according to the embodiment.
[Fig. 4] Figs. 4(a) to 4(c) show a reflector of the human body detecting device according to the embodiment, wherein (a) is a plan view, (b) is a front view, and (c) is a right side view of the reflector.
[Fig. 5] Fig. 5 is an explanatory diagram for describing a state in which the reflector according to the embodiment reflects a radio wave.
[Fig. 6] Figs. 6(a) to 6(c) show a reflector in another embodiment, where (a) is a plan view, (b) is a front view, and (c) is a right side view of the reflector.
[Fig. 7] Fig. 7 is a side cross-sectional view showing a reflector in yet another embodiment.
[Fig. 8] Figs. 8(a) to 8(b) show a human body detecting device according to a second embodiment, wherein (a) is a side cross-sectional view, and (b) is a horizontal cross-sectional view.
[Fig. 9] Figs. 9(a) to 9(c) show a reflector of the human body detecting device according to the second embodiment, where (a) is a plan view, (b) is a front view, and (c) is a right side view of the reflector.
[Fig. 10] Fig. 10 is an explanatory diagram for describing a state in which the reflector according to the second embodiment reflects a radio wave.
[Fig. 11] Figs. 11(a) to 11(c) show a reflector of the human body detecting device according to a third embodiment, where (a) is a plan view, (b) is a front view, and (c) is a right side view of the reflector.

### [Best Mode for Carrying Out the Invention]

### (First Embodiment)

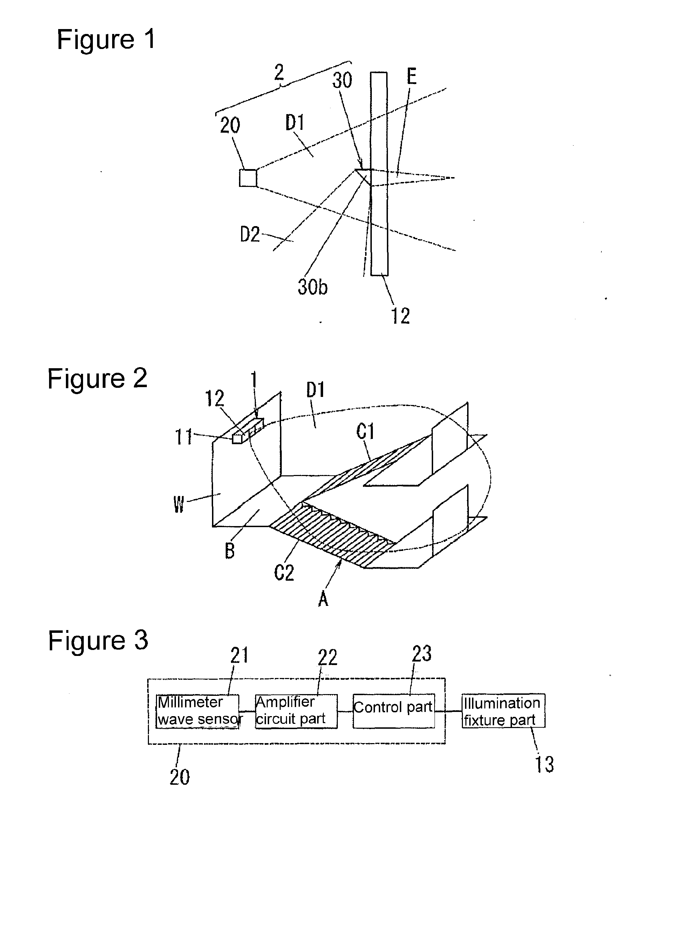

In a first embodiment, a wireless human body detecting device 2 detecting presence of a person using a radio wave will be described (see Fig. 1). A human body detecting device 2 is attached to a lighting device 1 shown in Fig. 2, and controls a lighting state of the lighting device 1 according to presence or absence of a person as described later.

The lighting device 1 includes a fixture main body 11 formed into a box having an open front and accommodating therein a light source (not shown) and the human body detecting device 2. An illumination cover 12 made of a translucent (for example, transparent) synthetic resin material and formed into a plate shape is attached to a front surface of the fixture main body 11 longitudinally to a thickness direction.

As shown in Fig. 1, the human body detecting device 2 includes a sensor main body 20 emitting a radio wave, and a reflector 30 arranged on a front surface of the sensor main body 20, and reflecting a part of the radio wave emitted by the sensor main body 20. The reflector 30 will be described later.

In this embodiment, a Doppler-type sensor that detects presence of a person using the Doppler effect will be described as an example of the sensor main body 20. That is, the sensor main body 20 determines whether or not a person is present according to a difference between a frequency of the emitted radio wave and that of the received radio wave using the fact that the frequency of the radio wave reflected by a moving object changes from that of the radio wave before being reflected.

As shown in Fig. 3, the sensor main body 20 includes a millimeter wave sensor 21 that emits a radio wave, receives the radio wave, and that outputs an IF signal with a frequency (so-called Doppler frequency) that is the difference between the frequency of the emitted radio wave and the received radio wave, an amplifier circuit 22 that amplifies the IF signal, and a control circuit 23 that determines whether or not a person is present according to the IF signal and that controls a lighting state of the lighting device 1.

A configuration of the millimeter wave sensor 21 is not described in detail. However, for example, the millimeter wave sensor 21 is configured to include an oscillator circuit, a transmitting antenna connected to an output side of the oscillator circuit, a receiving antenna receiving a radio wave reflected by a human body or the like, and a mixer circuit to which an output from the oscillator circuit and an output from the receiving antenna are inputted.

An output frequency of the oscillator circuit is set so that the transmitting antenna emits a millimeter wave. In addition, directivity of the transmitting antenna is set so that the transmitting antenna emits a radio wave forward. Degree of the directivity is decided by design. For example, the degree of the directivity is decided so that the transmitting antenna emits a radio wave at intensity set by design to fall in a range of open angles from -30 degrees to +30 degrees with respect to a line passing the sensor main body 20 along a longitudinal direction in a cross section including the line.

As the transmitting antenna, a horn antenna, for example, is used. As the receiving antenna, a pattern antenna formed using a conductor pattern of a printed wiring board, for example, is used.

The amplifier circuit 22 includes an amplifier using an operational amplifier and amplifies the IF signal. As the amplifier circuit 22, a filter-added amplifier circuit including a noise filter that eliminates components other than frequency components of the IF signal is used. Alternatively, the amplifier is configured to amplify only the frequency components of the IF signal.

The control circuit 23 compares a detection signal that is the amplified IF signal with a predetermined threshold, outputs a determination result of "0" if the detection signal is lower than the threshold, and outputs a determination result of "1" if the signal is equal to or higher than the threshold.

If the determination result is "1" and the light source is not lighted, the control circuit 23 inputs a lighting signal to a fixture main body part 13 including a lighting device lighting the light source to light the light source (not shown). In this case, the determination circuit 23 includes a clock function and starts measuring time when outputting the lighting signal. When the measured time reaches predetermined lighting keeping time, the control circuit 23 inputs a lighting-off signal to the fixture main body part 13 to light off the light source. The predetermined lighting holding time is, for example, set in advance.

If the determination result is "1" and the light source is lighted, the control circuit 23 resets the measured time to zero and measures time again. That is, the human body detecting device 2 lights off the light source while detecting presence of a person and lights off the light source after passage of the predetermined time (lighting keeping time) since the human body detecting device 2 does not detect the presence of a person. If the determination result is "0", the control circuit 23 does not output any signal.

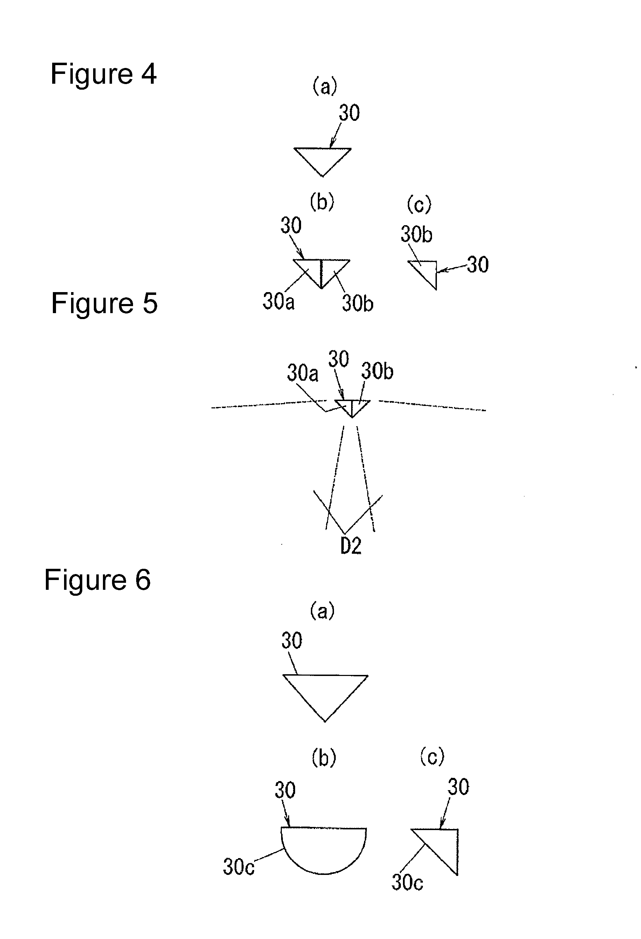

The reflector 30 arranged in front of the sensor main body 20 will next be described. The reflector 30 is made of a metallic material. As shown in Fig. 4, the reflector 30 is formed to be generally identical in shape to a triangular pyramid obtained by dividing a square pyramid having a height half as large as a length of a diagonal line of a bottom of the square pyramid by a plane including a central axis and the diagonal line of the (square) bottom. That is, the reflector is formed into a bilaterally symmetric triangular pyramid having a bottom and one of side surfaces that are right-angled isosceles triangles having hypotenuses orthogonal to each other, and remaining two side surfaces 30a and 30b that are regular triangles identical in shape and orthogonal to each other.

As shown in Fig. 1, the reflector 30 is attached to an illumination cover 12 in front of the sensor main body 20 while abutting the bottom of the reflector 30 on a rear surface of the illumination cover 12, and the side surfaces 30a and 30b of the reflector 30 reflect a part of a radio wave emitted from the sensor main body 20.

Therefore, a first area D1 that is a space in front of the illumination device 1 and a second area D2 that is a space irradiated with the radio wave reflected by the reflector 30 can be set to detection areas, respectively. Further, since the second area D2 is set to the detection area by the radio wave reflected by the reflector 30, it is possible to suppress deterioration of front sensitivity as compared with an instance of setting the second area D2 to the detection area by lowering directivity.

How the human body detecting device 2 detects presence of a person will be described while referring to an example of installing the illumination device 1 to which the human body detecting device 2 according to this embodiment is attached on a doglegged staircase A shown in Fig. 2. The doglegged staircase A includes a halfpace B, stairs C1 rising from the halfpace B, stairs C2 lowering from the halfpace B, and a wall W in front of which the stairs C1 and C2 are present. The illumination device 1 is installed onto the wall W (at a position, for example, 2 m from a floor of the halfpace B) so that the stairs C1 and C2 are located in front of the illumination device 1. That is, the first area D1 set to the detection area by the human body detecting device 1 includes the stairs C1 and C2 and the halfpace B except for a part of the halfpace B against the wall onto which the illumination device 1 is installed.

Directions of the side surfaces 30a and 30b of the reflector 30 are set to emit the reflected radio wave to the part of the halfpace B against the wall. That is, the second area D2 that is not shown in Fig. 2 but shown in Fig. 1 includes the part of the halfpace B against the wall.

Accordingly, the detection area is set to an area including the stairs C1 and C2 and the halfpace B (including the part of the halfpace B against the wall), and the human body detecting device 2 can detect a person present in the stair C1 or C2 or the halfpace B (including the part of the halfpace B against the wall).

Meanwhile, a radio wave refracted by an end of the reflector 30 is emitted to an area in front of the reflector 30. However, an area E having low sensitivity is generated near the reflector 30. In this embodiment, the reflector 30 is arranged in front of the sensor main body 20, and a magnitude of the reflector 30 is set to be almost equal to or smaller than that of an antenna surface of the transmitting antenna from which surface the radio wave is emitted. This prevents the area E from being made excessively long in a longitudinal direction even if a distance between the sensor main body 20 and the reflector 30 is set short (to, for example, 10 cm).

While the configuration of forming the reflector 30 into a shape of the triangular pyramid has been described, the shape of the reflector 30 is not limited to the triangular pyramid. However, the reflector 30 can be formed into a shape of a triangular pyramid having an open bottom. As shown in Fig. 6, the reflector 30 can be formed into a shape obtained by dividing a cone by a plane including a central axis. If the reflector 30 is formed into the shape obtained by dividing the cone by the plane including the central axis, a curved surface 30c of the reflector 30 reflects the radio wave emitted from the transmitting antenna.

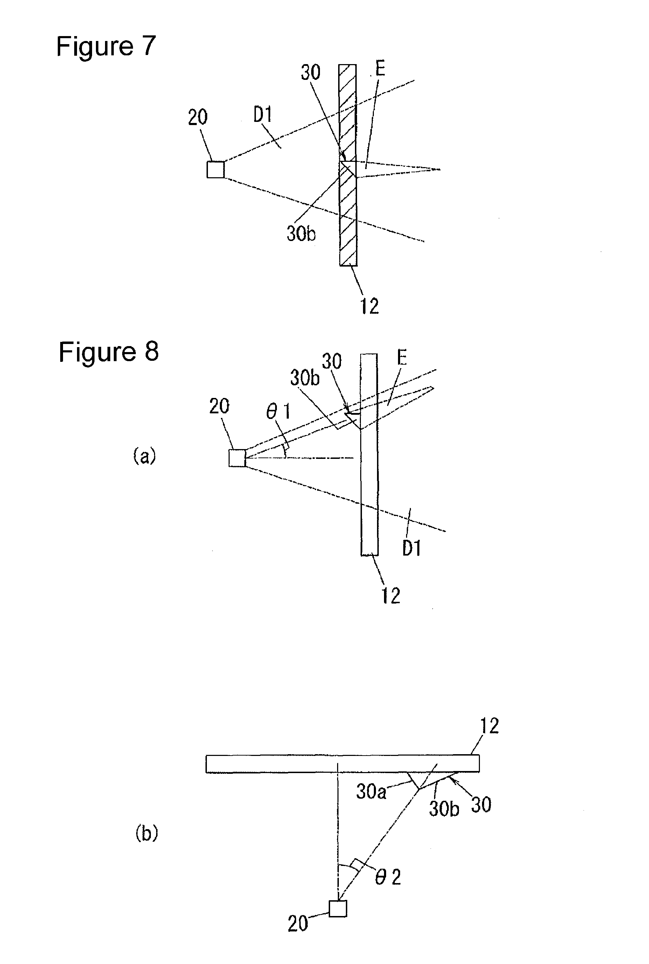

In another alternative, the reflector 30 can be attached to the illumination cover 12 in such a fashion as to be buried in the illumination cover 12 as shown in Fig. 7. For example, a fitting concave portion into which the reflector 30 is fitted is provided in the illumination cover 12.

### (Second Embodiment)

In the first embodiment, the configuration of arranging the reflector 30 in front of the sensor main body 20 has been described. In this embodiment, a configuration of arranging the reflector 30 in a portion other than a portion in front of the sensor main body 20 will be described as shown in Fig. 8.

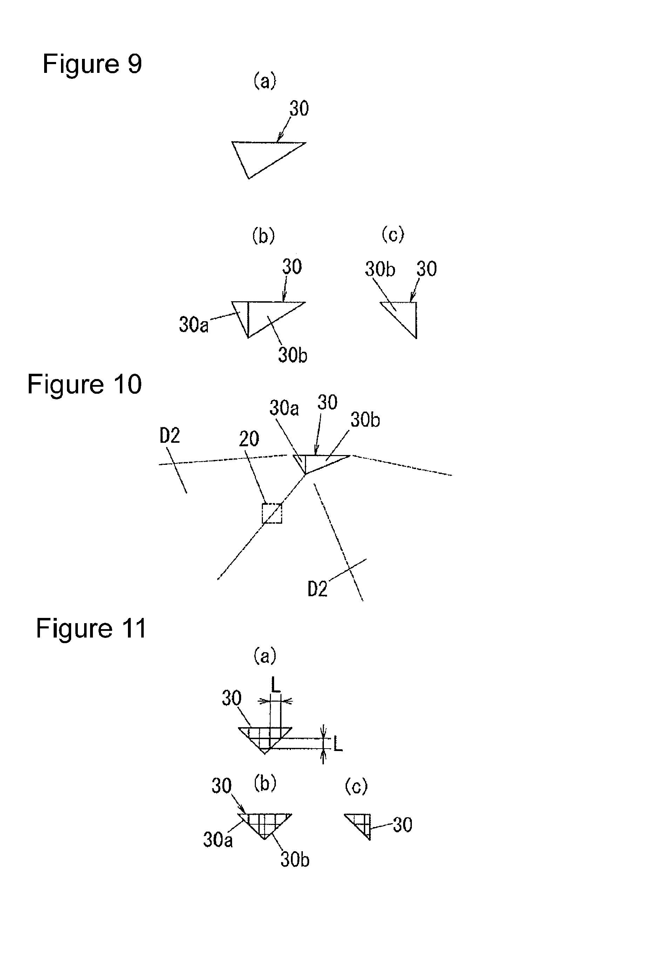

In this embodiment, the reflector 30 is formed into a triangular pyramid having a bottom and one side surface that are orthogonal to each other as shown in Fig. 9. As shown in Fig. 8, the reflector 30 is arranged at a position other than that in front of the sensor main body 20 so that the bottom of the reflector 30 abuts on the illumination cover 12.

The position of the reflector 30 is defined by an angle θ1 formed between a line passing through the sensor main body 20 along the longitudinal direction and a line connecting the sensor main body 20 to the reflector 30 if the human body detecting device 2 is viewed from a direction orthogonal to a vertical direction and the longitudinal direction (see Fig. 8(a)), and an angle θ2 formed between a line passing through the sensor main body 20 along the longitudinal direction and a line connecting the sensor main body 20 to the reflector 30 if the human body detecting device 2 is viewed from upward (see Fig. 8(b)).

The angles θ1 and θ2 are set so that the reflector 30 reflects radio waves emitted toward a space where there is no need to detect presence of a person.

For example, if the illumination device 1 is disposed on the doglegged staircase A as described in the first embodiment, the angles θ1 and θ2 are set so that the reflector 30 reflects a radio wave emitted upward of the stairs C2 lowering from the halfpace B. Specifically, as shown in Fig. 10, the reflector 30 is arranged upper right of the sensor main body 20.

In this embodiment, directions of the side surfaces 30a and 30b of the reflector 30 are set so that the radio wave reflected by the side surface 30a or 30b is irradiated in the second area D2 according to the position where the reflector 30 is arranged, and the reflector 30 is formed asymmetrically.

In this embodiment, the second area D2 can be set to the detection area using the radio wave irradiated toward the space where there is no need to detect presence of a person. It is, therefore, possible to efficiently use emitted radio waves.

The other configurations of the human body detecting device 2 according to this embodiment are similar to those according to the first embodiment.

### (Third Embodiment)

In the first embodiment, the configuration of the human body detecting device 2 in which the reflector 30 formed into the shape of the triangular pyramid reflects the radio wave has been described. In this embodiment, a configuration of a human body detecting device in which the reflector 30 that is a meshed reflector reflects a radio wave will be described as shown in Fig. 11.

The reflector 30 is formed to have a triangular pyramid external shape identical to an external shape of the reflector 30 using a wire net having square meshes. A length L of a side of each mesh is set to be (for example, 5 mm) smaller than a half-wavelength 6.2 mm of the radio wave emitted by the reflector main body 20. That is, the reflector 30 includes a function of an electromagnetic shield that shields transmission of the radio wave emitted from the transmitting antenna. The radio wave shielded from being transmitted by the reflector 30 changes a direction on the side surfaces 30a and 30b of the reflector 30 and is irradiated onto the second area D2.

By forming the reflector 30 into the meshed reflector, the reflector 30 can transmit light from a light source (not shown). As compared with the first and second embodiments, shades of the reflector 30 generated on the illumination cover 12 by the light from the light source can be reduced.

While the reflector 30 is formed using the wire net in this embodiment, the reflector 30 can be formed using a metal plate into which many holes are formed by punching out the holes.

In this embodiment, the configuration of the human body detecting device in which the reflector 30 is arranged in front of the sensor main body 20 has been described. The reflector 30 can be arranged at a position other than that in front of the sensor main body 20 similarly to the second embodiment.

The other configurations of the human body detecting device according to this embodiment are similar to those according to the first embodiment.

### [Description of Reference Numerals]

- 2: Human body detecting device
- 20: Sensor main body
- 30, 31: Reflector
- 32: Reflector (mesh)
- D1: First area
- D2: Second area

## Claims

1. A human body detecting device comprising:
a sensor main body emitting a radio wave toward a first area in front of the sensor main body, receiving the radio wave, and determining whether a person is present according to relationship between the emitted radio wave and the received radio wave; and
a reflector reflecting a part of the radio wave emitted by the sensor main body, wherein:
the reflector reflects the radio wave toward a second area other than the first area in front of the sensor main body.

2. The human body detecting device according to claim 1, wherein:
the reflector is made of a metallic material.

3. The human body detecting device according to claim 2, wherein:
the reflector is a meshed reflector.
